# EUROPÄISCHE PATENTSCHRIFT

(11) **EP 0 794 191 B1**
(45) Veröffentlichungstag und Bekanntmachung des Hinweises auf die Patenterteilung: **07.05.2003**
(21) Anmeldenummer: 97102722.2
(22) Anmeldetag: 20.02.1997
(51) Int. Cl.: C07F 9/6568, C08K 5/5313

(54) **Salze von 1-Hydroxy-dihydrophospholoxiden und 1-Hydroxy-phospholanoxiden und ihre Verwendung als Flammschutzmittel**
Salts of 1-hydroxy-dihydrophospholoxides and 1-hydroxyphospholanoxides and their use as fire-retardants
Sels d'oxydes de 1-hydroxy-dihydrophospholes et d'oxydes de 1-hydroxy-phospholanes et leur utilisation comme agents ignifugeants

(30) Priorität: 04.03.1996 DE 19608011
(43) Veröffentlichungstag der Anmeldung: 10.09.1997
(73) Patentinhaber: Ticona GmbH, 65451 Kelsterbach (DE)
(72) Erfinder: Kleiner, Hans-Jerg, Dr., 61476 Kronberg (DE); Budzinsky, Winfried, 65812 Bad Soden (DE); Kirsch, Günther, Dr., 65812 Bad Soden (DE)

(56) Entgegenhaltungen:
- EP-A- 0 699 708
- EP-A- 0 794 189
- WO-A-98/20012
- BE-A- 700 042
- DE-A- 2 252 258
- DE-A- 2 447 727
- DE-A- 2 915 116
- J. POLYM. SCI., PART A.-1. (JPLCAT);68; VOL.6 (7); PP.1975-90, NAV. WEAPONS CENTER;CORONA; CALIF., XP000674635 SLOTA P J, JR. ET AL: "Metal coordination polymers. I. Synthesis and thermogravimetric analysis of beryllium phosphinate polymers"

## Beschreibung

Die Erfindung betrifft Aluminium-Salze von 1-Hydroxy-dihydrophophol-oxiden und 1-Hydroxyphospholanoxiden und deren Verwendung als Flammschutzmittel.

Polymere werden häufig dadurch flammfest, daß man diesen phosphorhaltige oder halogenhaltige Verbindungen oder Gemische davon zusetzt. Einige Polymere werden bei hohen Temperaturen, z.B. bei 250°C oder höheren Temperaturen verarbeitet. Aus diesem Grund eignen sich viele bekannte Flammschutzmittel nicht für solche Anwendungen, weil sie zu flüchtig oder nicht ausreichend hitzebeständig sind.

Alkalisalze von Phosphinsäuren sind als flammhemmende Zusätze für Polyamid-Formmassen bekannt (DE-A1-2 447 727). Sie neigen jedoch zu Korrosionseffekten.

Die Verwendung von Salzen cyclischer Phosphinsäuren als Flammschutzmittel für Kunststoffe, Textilien oder Papier wird in der BE-A-700 042 offenbart. J. Polym. Sci, Part A-1, Vol. 6, 1975-1990 (1968) lehrt die Herstellung von Berylliumphosphinat-Koordinationspolymeren, insbesondere des thermisch stabilen Berylliumsalzes von 1-Hydroxyphospholanoxid.

Es war daher Aufgabe der vorliegenden Erfindung flammhemmende Zusatzstoffe zur Verfügung zu stellen, welche nicht die Nachteile der bekannte flammhemmenden Zusatzstoff aufweisen. Insbesondere sollen die flammhemmenden Zusatzstoffe einfach und preiswert herzustellen sein und eine gute flammhemmende Wirkung haben und sich durch eine hohe Temperaturbeständigkeit auszeichnen.

Es wurde überraschenderweise gefunden, daß Aluminium-Salze von 1-Hydroxy-dihydrophospholoxiden und/oder 1-Hydroxyphospholanoxiden eine ausgezeichnete flammhemmende Wirkung in thermoplastischen Kunststoffen wie Polyamid oder Polyester aufweisen.

Gegenstand der Erfindung sind daher Salze von 1-Hydroxy-dihydrophospholoxiden und/oder 1-Hydroxyphospholanoxiden sowie ihre Verwendung als Flammschutzmittel.

Gegenstand der Erfindung sind weiterhin Formmassen, die einen Thermoplast und mindestens ein Aluminium-Salz von einem 1-Hydroxy-dihydrophospholoxid und/oder 1-Hydroxyphospholanoxid enthalten.

Bevorzugte Salze sind die Aluminium-Salze von 1-Hydroxy-dihydrophospholoxiden gemäß der Formel (Ia) oder Formel (Ib) und Aluminium-Salze von 1-Hydroxyphospholanoxiden gemäß der Formel (II) 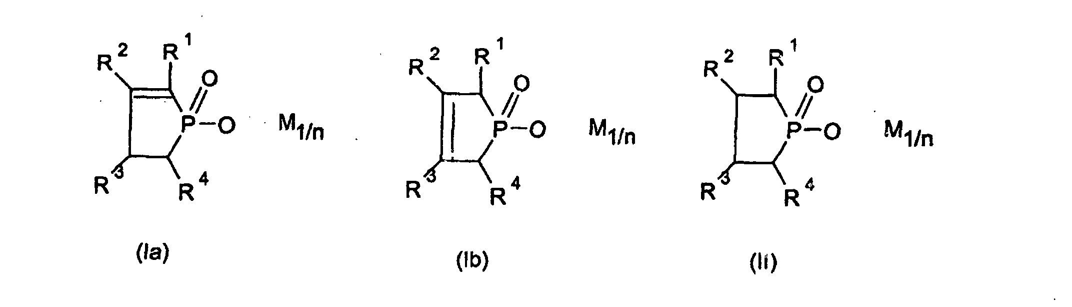 worin
- R¹, R², R³, R⁴: Wasserstoffrest oder einen linearen oder verzweigten Alkylrest, bevorzugt einen linearen oder verzweigten C₁-C₁₂-Alkylrest, besonders bevorzugt C₁-C₄-Alkylrest, insbesondere einen Methylrest und/oder Ethylrest; und
- M: Aluminium; und
- n: die Zahl 3
bedeuten.

Die vorstehend beschriebenen Aluminium-Salze von 1-Hydroxy-dihydrophospholoxiden und 1-Hydroxyphospholanoxiden werden im folgenden zusammenfassend als Salze bezeichnet.

Für die Zwecke der Erfindung besonders geeignete Salze sind beispielsweise: Die Aluminium-Salze von 1-Hydroxy-3-Alkyl-2,3-dihydro-1H-phosphol-1-oxid, 1-Hydroxy-3-methyl-2,5-dihydro-1H-phosphol-1-oxid, 1-Hydroxy-2,3-dihydro-1H-phosphol-1-oxid, 1-Hydroxy-2,5-dihydro-1H-phosphol-1-oxid, 1-Hydroxy-1H-phospholan-1-oxid und 1-Hydroxy-3-methyl-1H-phospholan-1-oxid sowie Gemische dieser Salze.

Die Salze können aus 1-Hydroxy-dihydrophospholoxiden und 1-Hydroxyphospholanoxiden in wäßriger Lösung durch Umsetzung mit den entsprechenden Metallcarbonaten, Metallhydroxiden oder Metalloxiden hergestellt werden. Hierzu wird im allgemeinen 1-Hydroxy-dihydrophospholoxid und/oder 1-Hydroxyphospholanoxid in Wasser gelöst und vorteilhafterweise unter Rühren mit dem entsprechenden Metallhydroxid, Metallcarbonat oder Metalloxid in stöchiometrischen Mengen versetzt. Die Reaktionsmischung wird dann im allgemeinen erwärmt, vorzugsweise auf einen Temperaturbereich von 30 bis 150°C, insbesondere 70 bis 110°C und mehrere Stunden gerührt. Die Reaktionszeiten liegen im Bereich von einigen Stunden (mindestens 10 Stunden) bis zu mehrere Tagen (1 bis 7 Tage). Nach erfolgter Umsetzung wird die Reaktionsmischung durch übliche Methoden (Abkühlen, Absaugen, Waschen, Trocknen etc.) aufbereitet.

Die Ausgangsverbindungen sind im Stand der Technik bekannt und (z.B. 1-Hydroxy-dihydrophospholoxid) nach bekannten Verfahren (z.B. aus den 1-Chlordihydrophospholoxiden) zugänglich, die beispielsweise entsprechend EP-A1-0452755 hergestellt werden können. Aus den 1-Chlor-dihydrophospholoxiden können durch Hydrierung die 1-Hydroxy-phospholanoxide hergestellt werden.

Die erfindungsgemäßen Salze sind im allgemeinen thermisch stabil. Sie zersetzen beim Einarbeiten in Thermoplaste die Polymeren nicht und bei der Verarbeitung beeinflussen sie nicht den Herstellprozess der thermoplastischen Formmasse. Die Salze sind unter den üblichen Herstellungs- und Verarbeitungsbedingungen für Thermoplaste im allgemeinen nicht flüchtig. Sie weisen eine hervorragende flammhemmende Wirkung auf.

Bevorzugter Thermoplast (hier auch thermoplastischer Kunststoff oder Polymer genannt) ist Polyamid, z. B. Polyamid 46 oder Polyamid 66, oder Polyester, z.B. Polyethylenterephthalat (PET) oder Polybutylenterephthalat (PBT).

Polyamide und Polyester, die erfindungsgemäß eingesetzt werden können, sind beispielsweise in "Ullmann's" Encyclopedia of Industrial Chemistry, ed. Barbara Elvers, Vol. A21, Kapitel "Polyamide" (S. 179-205) und Kapitel "Polyesters" (S. 227-251), VCH, Weinheim-Basel-Cambridge-New York 1992" beschrieben, worauf Bezug genommen wird.

Die Menge der den thermoplastischen Kunststoffen zuzusetzenden Salze kann innerhalb weiter Grenzen variieren. Im allgemeinen verwendet man 5 bis 30 Gew.- %, vorzugsweise 10 bis 20 Gew.-%, jeweils bezogen auf das Polymer. Die optimale Menge hängt von der Natur des Polymeren und der Art des eingesetzten Salzes ab und kann durch Versuche leicht bestimmt werden.

Die Salze können je nach Art des verwendeten Polymeren und der gewünschten Eigenschaften in verschiedener physikalischer Form angewendet werden. So können sie z. B. zur Erzielung einer besseren Dispersion im Polymeren zu einer feinteiligen Form vermahlen werden. Falls erwünscht können auch Gemische verschiedener Salze eingesetzt werden.

Das Salz kann in das Polymer eingearbeitet werden, indem beides vermischt und anschließend in einem Compoundieraggregat (z.B. Zweischneckenextruder) das Polymer aufgeschmolzen und das Salz in der Polymerschmelze homogenisiert wird. Die Schmelze kann als Strang abgezogen, gekühlt und granuliert werden. Das Salz kann auch direkt in das Compoundieraggregat dosiert werden.

Es ist ebenso möglich, die flammhemmenden Zusätze einem fertigen Polymergranulat beizumischen und direkt auf einer Spritzgießmaschine zu verarbeiten oder vorher in einem Extruder aufzuschmelzen, zu granulieren und nach einem Trocknungsprozess zu verarbeiten.

Der flammhemmende Zusatz kann auch während der Herstellung des Polymeren erfolgen, z. B. während der Polykondensation bei Polyestern.

Den Polymer-Einstellungen können neben den erfindungsgemäßen Salzen Füllstoffe (zum Beispiel Talkum, Glimmer, Wollastonit, Kreide, Glaskugeln), Verstärkungsstoffe (wie Glasfasern, Glasflocken, mineralische Fasern, Kohlenstofffaser), Ruß, Farbstoffe, Pigmente, Stabilisatoren, UV-Stabilisatoren, Gleit- und Entformungshilfsmittel, Nukleierungsmittel, Antistatika, Weichmacher oder sonstige Additive enthalten.

Besonders bevorzugt werden Formteile aus Formmassen, die Polyester, mindestens ein erfindungsgemäßes Salz und Glasfaser enthalten. Formteile aus solchen Formmassen zeigen besonders günstige flammhemmende Eigenschaften.

Die erfindungsgemäßen flammfesten Formmassen eignen sich zur Herstellung von Formkörpern, Filmen, Fäden und Fasern, z.B. durch Spritzgießen, Extrudieren oder Verpressen.

Die Formmassen gemäß der Erfindung, insbesondere Formmassen, die Polyester oder Polyamid und die erfindungsgemäßen Salze enthalten, zeichnen sich durch eine hohe Kriechstromfestigkeit (höherer CTI) aus. Besondere Anwendungen dieser Formmassen sind:

Elektrische Bauteile, wie Spulenkörper, Transformatoren, Relais, Schalter, Steckverbindungen, Motoren und Motorenteile (Rotoren, Lagerschilde etc.), dreidimensionale Teile mit integrierten Leiterstrukturen ("Molded Interconnection Devices" = MID), Sockel (z.B. SIMM-Sockel), mechanische Bauteile in Elektro- und Haushaltsgeräten, z.B. Zahnräder, Hebel, Nockenwellen, Abstandhalter, Scharniere, Gleitlager, Gehäuse, Abdeckungen, Ummantelungen und Beschichtungen von elektrischen Bauteilen und Geräten, z.B. Kondensatorgehäuse, Relaisgehäuse, Kondensatordeckel, Kabelummantelungen.

Ein weiterer Gegenstand der Erfindung ist daher die Verwendung von thermoplastischen Kunststoffen, die mindestens ein Salz von 1-Hydroxy-dihydrophospholoxiden oder 1-Hydroxyphospholanoxiden enthalten, zur Herstellung von Formkörpem, insbesondere elektrische Bauteile, mechanische Bauteile, Stecker, Fassungen, Gehäuse, Abdeckungen, Ummantelungen, Beschichtungen.

Die Salze können auch Bestandteil von Lacken wie Brandschutzlacken, insbesondere von Brandschutzlacken für Kunststoffe wie Polyoxymethylen, Polyester oder Polyamid sein.

Gegenstand der Erfindung ist daher auch die Verwendung von Salzen von 1-Hydroxy-dihydrophospholoxiden und/oder 1-Hydroxyphospholanoxiden als Bestandteil von Lacken, insbesondere von Brandschutzlacken.

### Beispiele

### 1. Herstellung der Salze

### 1.1. Herstellung des Aluminiumsalzes des 1-Hydroxy-2,5-dihydro-1H-phosphol-1-oxids

105 g (0,89 Mol) 1-Hydroxy-2,5-dihydro-1H-phosphol-1-oxid werden in 250 g Wasser gelöst und unter Rühren mit 23,1 (0,297 Mol) Aluminiumhydroxid versetzt. Nun wird auf 90°C erhitzt und 24 Stunden bei dieser Temperatur gerührt. Dann wird abgekühlt, abgesaugt und mit Wasser gewaschen. Man erhält nach Trocknung im Vakuum-Trockenschrank bei 150°C 111,5 g eines weißen Pulvers, das bis 360°C nicht schmilzt. Die Ausbeute beträgt ca. 100 % d. Th.

### 1.2. Herstellung der Aluminiumsalze eines Gemisches von 1-Hydroxy-2,5-dihydro-1H-phosphol-1-oxid und von 1-Hydroxy-2,3-dihydro-1H-phosphol-oxid

901 g (7,63 Mol) einer Mischung von 1-Hydroxy-2,5-dihydro-1H-phosphol-1-oxid und 1-Hydroxy-2,3-dihydro-1H-phosphol-oxid im Molverhältnis etwa 1:1 werden in 1800 g Wasser gelöst und unter Rühren mit 198,5 g (2,54 Mol) Aluminiumhydroxid versetzt. Dann wird auf 90°C erhitzt und 50 Stunden unter Rühren gehalten. Anschließend wird abgesaugt und im Vakuum-Trockenschrank getrocknet. Man erhält 962 g eines schwach gelblich-weißen Pulvers, das bis 360°C nicht schmilzt. Die Ausbeute beträgt ca. 100 % d. Th.

### 1.3. Herstellung des Aluminiumsalzes des 1-Hydroxy-1H-phospholan-1-oxides

60 g 1-Hydroxy-1H-phospholan-1-oxid werden in 95 ml Wasser gelöst und unter Rühren auf 85 °C erhitzt. Nun werden dazu 13 g (0,167 Mol) Aluminiumhydroxyd gegeben und etwa 20 Stunden bei dieser Temperatur gehalten. Dann wird abgesaugt und getrocknet. Man erhält 58 g eines weißen Pulvers, das bis 360 °C nicht schmilzt. Die Ausbeute beträgt ca. 91 % d. Th.

### 1.4. Herstellung des Aluminiumsalzes des 1-Hydroxy-3-methyl-2,5-dihydro-1H-phosphol-1-oxids

25 g (0,189 Mol) 1-Hydroxy-3-methyl-2,5-dihydro-1H-phosphol-1-oxid werden in 50 ml Wasser gegeben und mit 4,9 g (0,063 Mol) Aluminiumhydroxid 30 Stunden unter Rückfluß gerührt. Dann wird abgesaugt und vier Tage bei 140 °C im Vakuum-Trockenschrank getrocknet. Man erhält 25 g eines weißen Pulvers, das bei 360 °C nicht schmilzt. Die Ausbeute beträgt 94 % d. Th.

### 2. Herstellung und Prüfung von flammhemmenden Polyester

Die phosphorhaltigen Verbindungen (Salze) wurden mit dem Polymeren vermischt und auf einem handelsüblichen Zweiwelten-Compounder eingearbeitet. Bei glasfaserverstärkten Einstellungen wurden für Polyester handelsübliche Glasfasern in die Schmelze dosiert.

Die Massetemperaturen bei der Compoundierung betrugen bei Polybutylenterephthalat (PBT) ca. 250 °C. Die Probekörper wurden auf einer Spritzgießmaschine nach ISO 7792-2 hergestellt.

An Probekörper aus jeder Mischung wurden die Brandklasse UL 94 (Underwriter Laboratories) an Probekörpern der Dicke 1,2 mm bestimmt und Reißfestigkeit und Bruchdehnung nach ISO 527 ermittelt.

### 2.1 Aus PBT und dem Aluminiumsalz des 1-Hydroxy-2,5-dihydro-1 H-phosphol-1-oxids (hergestellt nach Beispiel 1.1) wurden mit 30 % Glasfasern verstärkte Compounds ohne weitere Zusätze hergestellt, Prüfkörper gespritzt und mit folgendem Ergebnis geprüft:

| Konzentration Al-Salz % | Brandklasse UL 94 | Reißfestigkeit N/mm² | Bruchdehnung % |
|---|---|---|---|
| 20 | V-0 | 116 | 1,9 |
| 17,5 | V-1 | 119 | 1,9 |
| 15 | V-2 | 131 | 2,1 |
| 12,5 | V-2 | 134 | 2,5 |

### 2.2 Aus PBT und dem Aluminiumsalz des 1-Hydroxy-3-methyl-2,5-dihydro-1H-phosphol-1-oxids (hergestellt gemäß Beispiel 1.4) wurde mit 30 % Glasfasern verstärkte Compounds ohne weitere Zusätze hergestellt, Prüfkörper (0,8 mm) gespritzt und mit folgendem Ergebnis geprüft:

| UL 94 | V-0 (0,8 mm) |
|---|---|
| Konzentration | Brandklasse |
| Aluminiumsalz | UL 94 |
| 20% | V-0 |

## Patentansprüche

1. Salze von 1-Hydroxy-dihydrophospholoxiden gemäß Formel (Ia) oder Formel (Ib) und 1-Hydroxyphospholanoxiden gemäß Formel (II) 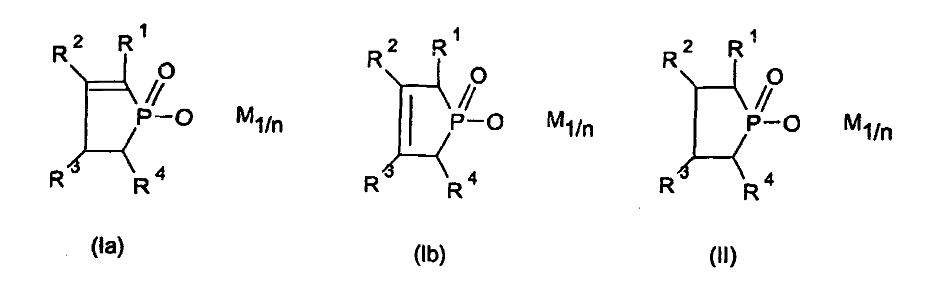 wobei
R¹, R², R³, R⁴ Wasserstoff oder einen geradkettigen oder verzweigten Alkylrest,
M Aluminium; und
n die Zahl 3
bedeuten.

2. Salze nach Anspruch 1, wobei in den Formeln la, Ib und II die Reste R¹, R², R³, R⁴ einen geradkettigen oder verzweigten C₁ - C₁₂ - Alkylrest bedeuten.

3. Salze nach Anspruch 1, wobei in den Formeln la, Ib und II die Reste R¹, R², R³, R⁴ einen geradkettigen oder verzweigten C₁ - C₄ - Alkylrest bedeuten.

4. Salze nach Anspruch 1, wobei in den Formeln Ia, Ib und II die Reste R¹, R², R³, R⁴ Methyl oder Ethyl bedeuten

5. Aluminiumsalze von 1-Hydroxy-3-Alkyl-2,3-dihydro-1H-phosphol-1-oxid, 1-Hydroxy-3-methyl-2,5-dihydro-1H-phosphol-1-oxid, 1-Hydroxy-2,3-dihydro-1H-phosphol-1-oxid, 1-Hydroxy-2,5-dihydro-1H-phosphol-1-oxid, 1-Hydroxy-1H-phospholan-1-oxid und 1-Hydroxy-3-methyl-1H-phospholan-1-oxid sowie Gemische dieser Salze.

6. Verwendung von Salzen nach einem oder mehreren der Ansprüche 1 bis 5 als Flammschutzmittel oder flammhemmendes Mittel für Thermoplaste.

7. Verwendung der Salze nach Anspruche 6, wobei der Thermoplast Polyester oder Polyamid ist.

8. Flammgeschützte Formmassen, die einen Thermoplast und mindestens ein Salz nach einem oder mehreren der Ansprüche 1 bis 5 enthalten.

9. Formmassen gemäß Anspruch 8, **dadurch gekennzeichnet, dass** die Formmassen das Salz in einer Menge von 5 bis 30 Gew.-%, bezogen auf das Gewicht des Thermoplasten, enthalten.

10. Verwendung von Formmassen nach Anspruch 9 zur Herstellung von Formkörpem, insbesondere elektrischen Bauteilen, mechanischen Bauteilen, Steckern, Fassungen, Gehäusen, Abdeckungen, Ummantelungen, Beschichtungen.

11. Verwendung von Salzen nach einem oder mehreren der Ansprüche 1 bis 5 als Bestandteil von Brandschutzlacken.

## Claims

1. Salts of 1-hydroxydihydrophosphole oxides as per the formula (Ia) or formula (Ib) and 1-hydroxy-phospholane oxides as per the formula (II) 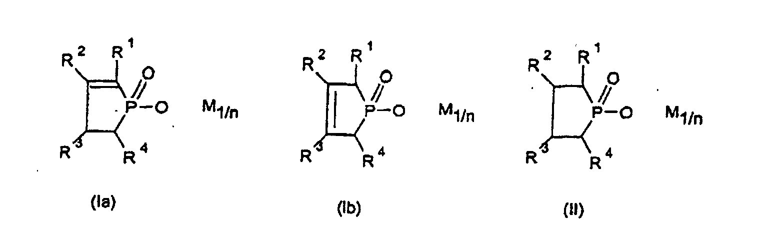 where
R¹, R², R³ and R⁴ are each hydrogen or a straight-chain or branched alkyl radical,
M is aluminum; and
n is 3.

2. Salts according to claim 1, where R¹, R², R³ and R⁴ are each a straight-chain or branched C₁-C₁₂-alkyl radical in the formulae Ia, Ib and II.

3. Salts according to claim 1, where R¹, R², R³ and R⁴ are each a straight-chain or branched C₁-C₄-alkyl radical in the formulae Ia, Ib and II.

4. Salts according to claim 1, where R¹, R², R³ and R⁴ are each methyl or ethyl in the formulae Ia, Ib and II.

5. Aluminum salts of 1-hydroxy-3-alkyl-2,3-dihydro-1H--phosphole 1-oxide, 1-hydroxy-3-methyl-2,5-dihydro-1H-phosphole 1-oxide, 1-hydroxy-2,3-dihydro-1H-phosphole 1-oxide, 1-hydroxy-2,5-dihydro-1H-phosphole 1-oxide, 1-hydroxy-1H-phospholane 1-oxide and 1-hydroxy-3-methyl-1H-phospholane 1-oxide and also mixtures thereof.

6. Use of salts according to one or more of claims 1 to 5 as a flame retardant for thermoplastics.

7. Use of the salts according to claim 6, where the thermoplastic is polyester or polyamide.

8. Flame-retardant molding compositions containing a thermoplastic and at least one salt according to one or more of claims 1 to 5.

9. Molding compositions as per claim 8, **characterized in that** the molding compositions contain the salt in an amount of 5 to 30% by weight, based on the weight of the thermoplastic.

10. Use of molding compositions according to claim 9 for manufacturing shaped articles, especially electrical components, mechanical components, plugs, mounts, casings, covers, sheaths, overcoats.

11. Use of salts according to one or more of claims 1 to 5 as a constituent of fire protection coatings.

## Revendications

1. Sels d'oxydes de 1-hydroxydihydrophosphols de formule (Ia) ou de formule (Ib) et d'oxydes de 1-hydroxyphospholanes de formule (II) 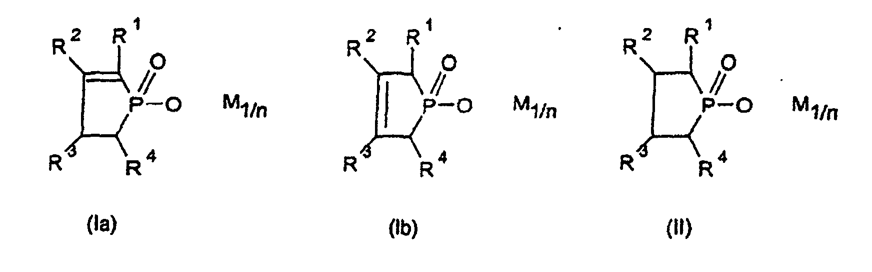 dans lesquelles
R¹, R², R³, R⁴ représentent un atome d'hydrogène ou un radical alkyle à chaîne droite ou ramifiée,
M représente l'aluminium et
n représente le nombre 3.

2. Sels selon la revendication 1, dans lesquels, dans les formules Ia, Ib et II, les radicaux R¹, R², R³, R⁴ représentent un radical alkyle en C₁-C₁₂ à chaîne droite ou ramifiée.

3. Sels selon la revendication 1, dans lesquels, dans les formules Ia, Ib et II, les radicaux R¹, R², R³, R⁴ représentent un radical alkyle en C₁-C₄ à chaîne droite ou ramifiée.

4. Sels selon la revendication 1, dans lesquels, dans les formules Ia, Ib et II, les radicaux R¹, R², R³, R⁴ représentent le groupe méthyle ou éthyle.

5. Sels d'aluminium de 1-oxyde de 1-hydroxy-3-alkyl-2,3-dihydro-1H-phosphol, 1-oxyde de 1-hydroxy-3-méthyl-2,5-dihydro-1H-phosphol, 1-oxyde de 1-hydroxy-2,3-dihydro-1H-phosphol, 1-oxyde de 1-hydroxy-2,5-dihydro-1H-phosphol, 1-oxyde de 1-hydroxy-1H-phospholane et 1-oxyde de 1-hydroxy-3-méthyl-1H-phospholane.

6. Utilisation de sels selon une ou plusieurs des revendications 1 à 5, en tant que retardateur de combustion ou agent ignifuge pour matières thermoplastiques.

7. Utilisation des sels selon la revendication 6, dans laquelle la matière thermoplastique est un polyester ou polyamide.

8. Matières à mouler ignifugées qui contiennent une matière thermoplastique et au moins un sel selon une ou plusieurs des revendications 1 à 5.

9. Matières à mouler selon la revendication 8, **caractérisées en ce que** les matières à mouler contiennent le sel en une quantité de 5 à 30 % en poids, par rapport au poids de la matière thermoplastique.

10. Utilisation de matières plastiques à mouler selon la revendication 9 pour la fabrication de corps moulés, en particulier de composants électriques, de composants mécaniques, de fiches, de douilles, de boîtiers, de couvercles, de gaines ou de revêtements.

11. Utilisation de sels selon une ou plusieurs des revendications 1 à 5, en tant que composant de vernis ignifuges.
